# EUROPÄISCHE PATENTANMELDUNG

(11) **EP 3 882 080 A1**
(43) Veröffentlichungstag der Anmeldung: **22.09.2021**
(21) Anmeldenummer: 21162917.5
(22) Anmeldetag: 16.03.2021
(51) Int. Cl.: B60R 1/00

(54) **SICHTSYSTEM FÜR EIN FAHRZEUG UND VERFAHREN ZUM UMSCHALTEN ZWISCHEN VON DEM SICHTSYSTEM DARGESTELLTEN BILDBEREICHEN**

(30) Priorität: 20.03.2020 DE 102020107789
(71) Anmelder: MEKRA Lang GmbH & Co. KG, 91465 Ergersheim (DE)
(72) Erfinder: Lang, Dr., Werner, 91465 Ergersheim (DE); Bauer, Stefan, 91466 Gerhardshofen (DE); Enz, Andreas, 91593 Burgbernheim (DE); Zink, Matthias, 91620 Ohrenbach (DE)
(74) Vertreter: Kramer Barske Schmidtchen Patentanwälte PartG mbB

(57) **Zusammenfassung**

Ein Sichtsystem für ein Fahrzeug mit einem Zugfahrzeug (5) und einem am Zugfahrzeug (5) schwenkbar angebrachten Anhänger (6) weist auf: mindestens eine erste Bildaufnahmevorrichtung (2a, 2b) zum Erfassen von ersten Bilddaten eines ersten Aufnahmebereichs; mindestens eine zweite Bildaufnahmevorrichtung (3a, 3b) zum Erfassen von zweiten Bilddaten eines den ersten Aufnahmebereich überschneidenden zweiten Aufnahmebereichs, wobei die erste und zweite Bildaufnahmevorrichtung (2a, 2b, 3a, 3b) unterschiedliche optische Eigenschaften aufweisen; eine Vorrichtung (4a, 4b,) zum Bearbeiten der ersten und zweiten Bilddaten zum Extrahieren eines ersten Bildbereichs (7) aus den ersten Bilddaten und zum Extrahieren eines zweiten Bildbereichs (8) aus den zweiten Bilddaten1; eine Anzeigevorrichtung (1a, 1b) zum Anzeigen des ersten Bildbereichs (7) und/oder des zweiten Bildbereichs (8) in einem gleichen Anzeigefeld der Anzeigevorrichtung (1a, 1b); eine Knickwinkelbestimmungsvorrichtung zum kontinuierlichen Bestimmen eines Knickwinkels zwischen dem Zugfahrzeug (5) und dem Anhänger (6); und eine Anzeigeumschaltvorrichtung zum Umschalten oder Überblenden der Anzeige des ersten Bildbereichs (7) und der Anzeige des zweiten Bildbereichs (8) basierend auf einer Umschaltbedingung, die durch einen definierten Knickwickel K_{D} bestimmt ist, wobei zum Umschaltzeitpunkt die ersten Bilddaten des ersten Bildbereich (7) den Bilddaten des zweiten Bildbereichs (8) derart entsprechen, dass die jeweils aufgrund der ersten und zweiten Bilddaten von einem Benutzer auf der Anzeigevorrichtung (1a, 1b) wahrnehmbaren Bilder nahezu deckungsgleich sind.

## Beschreibung

Die Erfindung betrifft ein Sichtsystem für ein Fahrzeug und ein Verfahren zum Umschalten zwischen bzw. Überblenden von dem Sichtsystem dargestellten Bildereichen, sowie ein Fahrzeug mit einem Spiegelersatzsystem, das das Sichtsystem gemäß der vorliegenden Offenbarung ist.

Allgemein bekannte Sichtsysteme, die eine Hauptkamera und beispielsweise eine Weitwinkelkamera verwenden, kommen beispielsweise als Spiegelersatzsysteme in Fahrzeugen zum Einsatz. Die dabei verwendete Hauptkamera bildet dabei einen Hauptaufnahmebereich ab, und die Weitwinkelkamera einen Weitwinkelaufnahmebereich. Gemäß UN/ECE-R46 stellt dabei beispielsweise der Hauptsichtbereich ein Sichtfeld der Gruppe II dar, und der Weitwinkelsichtbereich ein Sichtfeld der Gruppe IV, um einem Fahrer jeweils fahrzeugseitige Sichtbereiche und/oder Sichtfelder darzustellen.

Für bestimmte Fahrsituationen ist es notwendig, den angezeigten Aufnahmebereich der Hauptkamera zu verändern, um andere Bereiche um das Fahrzeug herum einsehen zu können. Ein Beispiel für eine derartige Fahrsituation ist eine Kurvenfahrt, bei der sich ein Anhänger des Fahrzeugs weiter in den Hauptaufnahmebereich bewegt, wodurch der Hauptaufnahmebereich weniger bzw. keine relevanten Umgebungsinformationen mehr anzeigen kann.

Ein Problem besteht insbesondere darin, dass ein Öffnungswinkel der Hauptkamera stark eingeschränkt ist, um höchstmögliche Auflösung zu erreichen, z.B. um die Anforderungen des oben genannten Gruppe II Sichtfelds oder ein möglichst scharfes und hoch auflösendes Bild zu erreichen.

Bei speziellen Fahrsituationen, wie beispielsweise bei einer oben genannten Kurvenfahrt, ist es speziell bei einem Sichtsystem, das eine Hauptkamera und eine Weitwinkelkamera verwendet, die an einem Fahrzeug mit einem schwenkbaren Anhänger vorgesehen sind, möglich, dass die Grenze des Aufnahmebereichs der Hauptkamera schnell erreicht wird und auf das Sichtfeld der Weitwinkelkamera gewechselt werden muss, um relevante Information darzustellen.

Aufgabe der Erfindung ist es, ein Sichtsystem, speziell ein indirektes Sichtsystem zu schaffen, das einem Fahrer eines Fahrzeugs mit einem Zugfahrzeug und einem am Zugfahrzeug schwenkbar angebrachten Anhänger ermöglicht, jederzeit durch geeignetes Umschalten zwischen Kameras mit unterschiedlichen optische Eigenschaften die Fahrzeugumgebung, insbesondere den hinteren Anhängerbereich, wahrzunehmen.

Eine weitere Aufgabe der Erfindung ist es ein Verfahren zu schaffen zum Umschalten zwischen Bildbereichen auf einer Anzeigevorrichtung des Sichtsystems derart, dass der Fahrer des Fahrzeugs einen Wechsel zwischen Aufnahmebereichen unterschiedlicher optischer Kameras im Wesentlichen nicht wahrnimmt. Eine weitere Aufgabe der vorliegenden Erfindung ist die Schaffung eines Fahrzeugs mit einem Spiegelersatzsystem, das das Sichtsystem gemäß der Erfindung ist.

### Darstellung der Erfindung

Obige Aufgaben werden durch ein Verfahren mit den Merkmalen des Anspruchs 1, einem Sichtsystem mit den Merkmalen des Anspruchs 4 und ein Fahrzeug mit den Merkmalen des Anspruchs 16 gelöst. Bevorzugte Ausführungsformen sind in den abhängigen Ansprüchen angegeben.

Ein Verfahren gemäß einem Ausführungsbeispiel der vorliegenden Erfindung schaltet zwischen einem ersten und einem zweiten Bildbereich auf einer Anzeigevorrichtung in einem Fahrzeug mit einem Zugfahrzeug und einem am Zugfahrzeug schwenkbar angebrachten Anhänger um. Der erste Bildbereich, der auf einer Anzeigevorrichtung, beispielsweise einem an dem Zugfahrzeug angebrachten Monitor einem Fahrer angezeigt wird, wird beispielsweise dadurch erhalten, dass erste Bilddaten durch eine erste Bildaufnahmevorrichtung eines ersten Aufnahmebereichs erfasst und bearbeitet werden. Der zweite Bildbereich, der auf der Anzeigevorrichtung angezeigt werden kann, wird aus zweiten Bilddaten extrahiert, die von einer zweiten Bildaufnahmevorrichtung eines zweiten Aufnahmebereichs erfasst werden. Der von der zweiten Bildaufnahmevorrichtung erfassbare zweite Aufnahmebereich überschneidet sich dabei mit dem von der ersten Bildaufnahmevorrichtung erfassbaren ersten Aufnahmebereich. Die erste Bildaufnahmevorrichtung und die zweite Bildaufnahmevorrichtung haben dabei vorzugsweise unterschiedliche optische Eigenschaften, wie beispielsweise verschiedene Öffnungswinkel, Verzeichniskurven und/oder Winkelauflösungen. Die optischen Eigenschaften der ersten und zweiten Bildaufnahmevorrichtung, die vorzugsweise an einem Zugfahrzeug des Fahrzeugs angebracht sind, sind vorzugsweise derart, dass gesetzliche Regelungen erfüllt werden, insbesondere in Europa beispielsweise durch die Regel Nr. 46 der Wirtschaftskommission der Vereinten Nationen für Europa (UN/ECE (Addendum 45, Revision 6) vorgegeben. In dieser Regel sind beispielsweise ein Hauptspielgel (groß) (gemäß ECE-R46 "Hauptspiegel (groß) Gruppe II") und ein Weitwinkelspiegel (gemäß ECE-R46 "Weitwinkelspiegel Gruppe IV") neben weiteren Spiegeln vorgesehen. Die erste Bildaufnahmevorrichtung gemäß der vorliegenden Erfindung ist beispielsweise eine Hauptkamera, die das in der obigen Regel definierte Gruppe II Sichtfeld aufnehmen kann, und die zweite Bildaufnahmevorrichtung gemäß der vorliegenden Erfindung ist beispielsweise eine Weitwinkelkamera für einen Weitwinkelsichtbereich gemäß dem Gruppe IV Sichtfeld nach UN/ECE-R46. Zusätzlich oder alternativ können weitere Sichtbereiche (nicht gesetzlich oder durch Regelungen vorgeschrieben) um das Fahrzeug erfasst und angezeigt werden.

Mit dem Verfahren der vorliegenden Erfindung werden der oben genannte erste Bildbereich und/oder der zweite Bildbereich in einem gleichen Anzeigefeld einer Anzeigevorrichtung angezeigt. Die Anzeigevorrichtung, die beispielsweise eine LED-Anzeige ist, ist vorzugsweise derart ausgelegt, dass mehrere beispielsweise von unterschiedlichen Bildaufnahmevorrichtungen erfasste Bilddaten in dem gleichen Anzeigefeld angezeigt werden können. Gemäß dem Verfahren der vorliegenden Erfindung wird entweder der erste Bildbereich oder der zweite Bildbereich auf dem Anzeigefeld angezeigt. Gemäß dem Verfahren der vorliegenden Erfindung werden die Bildbereiche vorzugsweise derart angepasst und/oder überblendet, dass der Benutzer dieses Umschalten zwischen dem ersten und dem zweiten Bildbereich kaum wahrnimmt. Dadurch, dass in dem Bereich, in dem zwischen den Bildbereich, der von ersten Kamera aufgenommen ist, und dem Bereich, der von der zweiten Kamera aufgenommen ist, die Bildeigenschaften (und die Eigenschaften der Bildaufnahmevorrichtungen) sehr ähnlich oder gleich sind, nimmt der Fahrer das Umschalten bzw. Überblenden nur bei genauem Betrachten wahr, wenn in diesem Bereich zwischen dem ersten und dem zweiten Bild gewechselt wird. Die Begriffe Umschalten bzw. Überblenden umfassen in diesem Zusammenhang sowohl ein "abruptes" Umschalten zwischen dem ersten und zweiten Bildbereich, bei dem auch bei genauer zeitlicher Auflösung entweder nur der erste Bildbereich oder nur der zweite Bildbereich angezeigt werde, als auch ein "sanftes" Umschalten zwischen dem ersten und zweiten Bildbereich, bei dem bei genauer zeitlicher Auflösung der erste Bildbereich allmählich ausgeblendet und von dem zweiten Bildbereich überblendet wird.

Gemäß dem Verfahren der vorliegenden Erfindung wird ferner kontinuierlich ein Knickwinkel zwischen dem Zugfahrzeug und dem Anhänger durch eine Knickwinkelbestimmungsvorrichtung bestimmt. Die Knickwinkelbestimmungsvorrichtung ist beispielsweise ein Prozessor, der Drehzahlinformationen von Rädern bzw. Achsen des Zugfahrzeugs und des Anhängers erfasst, um daraus einen Knickwinkel zu berechnen. Das Bestimmen eines Knickwinkels zwischen einem Zugfahrzeug und einem Anhänger ist allgemein bekannt und kann auch durch andere Techniken bestimmt werden, beispielsweise Erfassen der hinteren Anhängerkante, z.B. durch Bilderkennung aus einem aufgenommenen Bild. Andere Knickwinkelbestimmungsmethoden sind möglich, bei denen beispielsweise bereits vorhandene Sensoren (ABS) verwendet werden.

Gemäß dem Verfahren der vorliegenden Erfindung wird zwischen der Anzeige des ersten Bildbereichs und der Anzeige des zweiten Bildbereichs basierend auf eine Umschaltbedingung umgeschaltet. Gemäß einem Ausführungsbeispiel ist diese Umschaltbedingung beispielsweise ein definierter Knickwinkel zwischen dem Zugfahrzeug und dem Anhänger. Das Umschalten gemäß der vorliegenden Erfindung erfolgt dabei derart, dass zum Umschaltzeitpunkt die ersten Bilddaten des ersten Bildbereichs den zweiten Bilddaten des zweiten Bildbereichs derart entsprechen, dass die jeweils aufgrund der ersten und zweiten Bilddaten von einem Benutzer auf der Anzeigevorrichtung wahrnehmbaren Bilder nahezu deckungsgleich sind. Mit anderen Worten, die aus den ersten und zweiten Bilddaten extrahierten ersten und zweiten Bildbereiche werden dem Fahrer des Fahrzeugs derart angezeigt, dass ein kleinstmöglicher Bildunterschied resultiert, insbesondere im Hinblick auf die optischen Eigenschaften des Bilds, so dass ein dem Fahrer angezeigtes Bild vor dem Umschalten nahezu deckungsgleich mit dem nach dem Umschalten angezeigten Bild ist.

Gemäß einer Weiterbildung des erfindungsgemäßen Verfahrens wird zwischen der Anzeige des ersten Bildbereichs und der Anzeige des zweiten Bildbereichs umgeschaltet, wenn der augenblicklich bestimmte Knickwinkel oberhalb oder unterhalb eines definierten Knickwinkels ist. Vorzugsweise liegt der definierte Knickwinkel innerhalb eines Knickwinkelbereichs mit einer unteren Knickwinkelgrenze und einer oberen Knickwinkelgrenze, wodurch ein Toleranzbereich definiert werden kann, um zu verhindern, dass bei geringen Änderungen des augenblicklichen Knickwinkels um den definierten Knickwinkel herum ein ständiges Umschalten zwischen den beiden Bildbereichen erfolgt. Ein derartiges schnelles Hin- und Herschalten der Anzeige des ersten Bildbereichs und der Anzeige des zweiten Bildbereichs würde der Fahrer als "Flackern" auf der Anzeigevorrichtung wahrnehmen.

Um ein obiges "Flackern" zu verhindern, wird vorzugsweise die erste Bildaufnahmevorrichtung aktiviert, um den ersten Bildbereich anzuzeigen, wenn der Knickwinkel die Knickwinkeluntergrenze des Knickwinkelbereichs erreicht. Wenn die erste Bildaufnahmevorrichtung bereits aktiv ist, also der erste Bildbereich angezeigt wird, bleibt diese aktiv. Wenn dagegen die zweite Bildaufnahmeeinheit aktiv ist, also der zweite Bildbereich angezeigt wird, wird auf die erste Bildaufnahmevorrichtung umgeschaltet. Anschließend erfolgt ein Umschalten von der ersten Bildaufnahmevorrichtung auf die zweite Bildaufnahmevorrichtung, wenn der augenblickliche Knickwinkel den definierten Knickwinkel erreicht.

Wenn der augenblickliche Knickwinkel die Knickwinkelobergrenze erreicht, wird die zweite Bildaufnahmevorrichtung aktiviert. Wenn die zweite Bildaufnahmevorrichtung bereits aktiv ist, bleibt diese aktiv. Wenn dagegen die erste Bildaufnahmevorrichtung aktiv ist, wird auf die zweite Bildaufnahmevorrichtung umgeschaltet. Anschließend erfolgt ein Umschalten von der zweiten Bildaufnahmevorrichtung auf die erste Bildaufnahmevorrichtung, wenn der augenblickliche Knickwinkel den definierten Knickwinkel erreicht. Mit einer aktiven Bildaufnahmevorrichtung ist dabei gemeint, dass durch diese aufgenommene Bilder angezeigt werden.

Wenn der augenblickliche Knickwinkel den definierten Knickwinkel erreicht, ohne vorher, also seit dem letzten Umschaltvorgang, die Knickwinkeluntergrenze oder die Knickwinkelobergrenze erreicht zu haben, erfolgt kein Umschalten, wodurch verhindert wird, dass zwischen der Anzeige des ersten Bildbereichs und der Anzeige des zweiten Bildbereichs schnell hin- und her geschaltet wird, wenn sich der augenblickliche Knickwinkel nur geringfügig um den definierten Knickwinkel herum ändert.

Gemäß einer Grundeinstellung wird der erste Bildbereich solange angezeigt, bis der augenblickliche Knickwinkel entweder den definierten Knickwinkel oder die obere Knickwinkelgrenze erreicht. Wenn das Fahrzeug geparkt wird, wird der aktuelle Systemzustand gespeichert, d.h. zum Beispiel Informationen über aktuellen Knickwinkel, aktuell dargestellte Bildbereiche bzw. Bildinformation, aktuell aktivierte Anzeige, etc. Wenn nach einem Parken des Fahrzeugs, bei dem der augenblickliche Knickwinkel den definierten Knickwinkel oder die obere Knickwinkelgrenze erreicht, das Fahrzeug gestartet wird, wird dann gemäß der Erfindung beispielsweise der zweite Bildbereich angezeigt, wenn dieser vor dem Parken abgespeichert worden ist.

Das oben beschriebene erfindungsgemäße Verfahren zum Umschalten zwischen Bildbereichen kann beispielsweise in einem Sichtsystem gemäß einem Ausführungsbeispiel der vorliegenden Erfindung verwendet werden.

Das Sichtsystem gemäß dem Ausführungsbeispiel der vorliegenden Erfindung wird für ein Fahrzeug verwendet, das ein Zugfahrzeug und einen am Zugfahrzeug schwenkbar angebrachten Anhänger aufweist. Gemäß dem Ausfuhrungsbeispiel weist das Sichtsystem vorzugsweise mindestens eine erste Bildaufnahmevorrichtung auf zum Erfassen von ersten Bilddaten eines ersten Aufnahmebereichs und mindestens eine zweite Bildaufnahmevorrichtung zum Erfassen von zweiten Bilddaten eines den ersten Aufnahmebereich überschneidenden zweiten Aufnahmebereichs, wobei die erste und zweite Bildaufnahmevorrichtung unterschiedlich optische Eigenschaften aufweisen. Wie oben erwähnt, ist die erste Bildaufnahmevorrichtung beispielsweise eine Hauptkamera und die zweite Bildaufnahmevorrichtung ist eine Weitwinkelkamera. Die Hauptkamera kann beispielsweise einen geringeren Öffnungswinkel und eine höhere Auflösung als die zweite Bildaufnahmevorrichtung aufweisen. Die optischen Eigenschaften umfassen beispielsweise Winkelauflösung, Öffnungswinkel und/oder Verzeichnung.

Die erste und zweite Bildaufnahmevorrichtung haben beispielsweise einen optischen Bildsensor und entsprechende optische Systeme wie Linsen.

Soweit in dieser Beschreibung auf Sichtfelder bzw. Sichtbereiche Bezug genommen wird, sind damit entsprechende Sichtbereiche gemeint, wie sie in den nationalen vorliegenden Regelungen jeweils definiert sind, beispielsweise für Europa in der oben genannten ECR-R46, vorzugsweise solche, die in diesen gesetzlichen Regelungen vorgeschrieben zur Anzeige sind (Sichtfelder).

Das Sichtsystem gemäß dem Ausführungsbeispiel der vorliegenden Erfindung weist ferner eine Vorrichtung auf zum Bearbeiten der ersten und zweiten Bilddaten, um einen ersten Bildbereich aus den ersten Bilddaten und einen zweiten Bildbereich aus den zweiten Bilddaten zu extrahieren. Der erste und zweite Bildbereich sind dabei derart, dass sie ein nahezu deckungsgleiches Bild liefern.

Das Sichtsystem gemäß dem Ausführungsbeispiel der vorliegenden Erfindung weist ferner eine Anzeigevorrichtung auf zum Anzeigen des ersten Bildbereichs bzw. des zweiten Bildbereichs in einem gleichen Anzeigefeld. Durch das Anzeigen des ersten Bildbereichs und des zweiten Bildbereichs in dem gleichen Anzeigefeld kann dem Fahrer die Umgebung des Fahrzeugs derart angezeigt werden, dass in Abhängigkeit von gewissen Fahrsituationen entweder das Bild der ersten Bildaufnahmevorrichtung (Hauptkamera mit hoher Auflösung) oder das Bild der zweiten Bildaufnahmevorrichtung (Weitewinkelkamera mit geringerer Auflösung) dargestellt wird.

Das Sichtsystem gemäß dem Ausführungsbeispiel weist ferner eine Knickwinkelbestimmungsvorrichtung auf zum kontinuierlichen Bestimmen eines Knickwinkels zwischen dem Zugfahrzeug und dem Anhänger. Die Knickwinkelbestimmungsvorrichtung kann beispielsweise aktiv den Knickwinkel zwischen dem Zugfahrzeug und Anhänger selbstständig bestimmen oder von einer externen Vorrichtung ein Signal empfangen, das Information über den Knickwinkel enthält.

Das Sichtsystem gemäß dem bevorzugten Ausführungsbeispiel weist ferner eine Anzeigeumschaltvorrichtung auf zum Umschalten zwischen der Anzeige des ersten Bildbereichs und der Anzeige des zweiten Bildbereichs basierend auf einer Umschaltbedingung. Die Umschaltbedingung ist beispielsweise ein definierter Knickwinkel, der von der Knickwinkelbestimmungsvorrichtung bestimmt bzw. empfangen wird. Das Umschalten erfolgt dabei gemäß dem oben beschriebenen Verfahren, also vorzugweise derart, dass zum Umschaltzeitunkt die ersten Bilddaten des ersten Bildbereichs den Bilddaten des zweiten Bildbereichs derart entsprechen, dass die jeweils aufgrund der ersten und zweiten Bilddaten von einem Benutzer auf der Anzeigevorrichtung wahrnehmbaren Bildern nahezu deckungsgleich sind. Dadurch wird erreicht, dass der Benutzer das Umschalten zwischen den Bildbereichen kaum wahrnimmt. Dies wird insbesondere dadurch erreicht, dass sich in dem ersten und zweiten Bildbereich entsprechende Bilddaten jeweils um vorzugsweise maximal 30 Pixel auf der Anzeigevorrichtung unterscheiden, was bei einer Anzeigevorrichtung mit einem Pixelmittenabstand von beispielsweise 0,18525 mm einem Abstand von 5,5575mm bedeutet. Abhängig von der Anzeigevorrichtung und/oder einem Abstand zu einem Betrachter der Anzeigevorrichtung kann die oben genannte maximale Pixelanzahl variieren.

In dem Sichtsystem gemäß dem vorliegenden Ausführungsbeispiel ist beispielsweise der Abstand zwischen der ersten und der zweiten Bildaufnahmevorrichtung vorzugsweise in einem Bereich von 10 mm bis 500 mm, d.h. die Bildaufnahmevorrichtungen sind vorzugsweise in maximal diesem Abstand zueinander am Fahrzeug angeordnet. Dabei ist zu beachten, dass je näher die beiden Bildaufnahmevorrichtungen zueinander sind, desto leichter ist es möglich, zum Umschaltzeitpunkt zwischen dem ersten und dem zweiten Bildbereich möglichst deckungsgleiche Bilder dem Benutzer anzuzeigen.

Wie oben erwähnt, überschneiden sich der erste Aufnahmebereich der ersten Bildaufnahmevorrichtung und der zweite Aufnahmebereich der zweiten Bildaufnahmevorrichtung, sodass es möglich ist, Bildbereiche auf der Anzeigevorrichtung darzustellen, die im Wesentlichen den gleichen Bildinhalt haben, jedoch mit unterschiedlichen optischen Charakteristiken aufgenommen worden sind. Gemäß dem bevorzugten Ausführungsbeispiel haben die erste und die zweite Bildaufnahmevorrichtung beispielsweise unterschiedliche Öffnungswinkel, wobei die optischen Achsen in der ersten und zweiten Bildaufnahmevorrichtung in Abhängigkeit von deren Öffnungswinkeln unter einem Ausrichtungswinkel von vorzugsweise 0° bis 60° zueinander ausgerichtet sind. Dadurch ist es möglich, einen entsprechend großen Bereich neben dem Fahrzeug durch Verwenden der ersten und zweiten Bildaufnahmevorrichtung zu erfassen.

Gemäß dem Sichtsystem des bevorzugten Ausführungsbeispiels ist es möglich, den Ausrichtungswinkel der ersten bzw. zweiten Bildaufnahmevorrichtung geeignet zu bestimmen, beispielsweise durch einen Entwickler des Sichtsystems, indem auf der Anzeigevorrichtung ein Referenzpunkt angezeigt wird, wobei dieser Referenzpunkt in dem ersten und zweiten Bildbereich den gleichen Pixelkoordinaten/Bilddaten entspricht. Dabei sind die Bildaufnahmevorrichtungen vorzugsweise am Fahrzeug fest zueinander justiert, oder alternativ im Falle von bewegbaren Kameras auch durch den Fahrzeugbenutzer mechanisch justierbar. Dadurch kann beispielsweise der Benutzer des Sichtsystems einen beliebigen Punkt, beispielsweise den hinteren Bereich des Anhängers als Referenzpunkt wählen, sodass zum Umschaltzeitpunkt an diesem Referenzpunkt eine möglichst genaue Übereinstimmung der Bilddaten des ersten und zweiten Bildbereichs vorliegt.

Alternativ zu dem oben genannten benutzerdefinierten Einstellen des Referenzpunkts ist es möglich, dass der Referenzpunkt vordefiniert ist, oder auch in Abhängigkeit von der Anhängerhöhe und/oder Anhängerlänge bzw. anderen Fahrzeuggeometrien einstellbar ist.

Gemäß dem Sichtsystem des vorliegenden Ausführungsbeispiels liegt speziell der Referenzpunkt auf einer senkrecht zur Fahrbahn stehenden Ebene, die durch einen Punkt im Bereich der hinteren Kante des Anhängers mit dem definierten Knickwinkel und durch die erste und zweite Bildaufnahmevorrichtung verläuft. Dadurch kann beispielsweise der Benutzer des Sichtsystems den Referenzpunkt beliebig auf diese Ebene verschieben und einen geeigneten Referenzpunkt festlegen, bei dem zum Umschaltzeitpunkt die angezeigten Bilddaten nahezu identisch sind. Um beispielsweise die hintere Kante des Anhänger beobachten zu können, ist vorzugsweise der Referenzpunkt von der ersten bzw. zweiten Bildaufnahmevorrichtung beabstandet und bei dem definierten Knickwinkel im Bereich der hinteren Kante des Anhängers festgelegt.

Um möglichst einen breiten Bereich neben und hinter dem Fahrzeug bzw. dem Anhänger darstellen zu können, sind die optischen Eigenschaften der ersten und zweiten Bildaufnahmevorrichtung vorzugsweise unterschiedlich bezüglich Winkelauflösung, Öffnungswinkel und/oder Verzeichnung.

Die zweite Bildaufnahmevorrichtung ist gemäß der Erfindung beispielsweise nicht so hochauflösend wie die erste Bildaufnahmevorrichtung, oder aber gleich auflösend, so dass insgesamt ein kostengünstiges System geschaffen werden kann.

Bei dem Sichtsystem gemäß dem bevorzugten Ausführungsbeispiel wird der definierte Knickwinkel, der die Umschaltbedingung definiert, innerhalb eines Knickwinkelbereichs mit einer unteren Knickwinkelgrenze und einer oberen Knickwinkelgrenze definiert. Wie oben unter Bezugnahme auf das erfindungsgemäße Verfahren beschrieben wird dadurch ein schnelles Umschalten zwischen der Anzeige des ersten Bildbereichs und der Anzeige des zweiten Bildbereichs verhindert, was der Benutzer störend wahrnehmen würde, wenn sich der augenblickliche Knickwinkel nur geringfügig um den definierten Knickwinkel herum ändert.

Gemäß dem Sichtsystem des vorliegenden Ausführungsbeispiels ist es ferner möglich, dass sich der definierte Knickwinkel in Abhängigkeit von einer Fahrsituation innerhalb des Knickwinkelbereichs ändert. Auf diese Weise ist es möglich in Reaktion auf verschiedene Fahrsituationen den optimalen Knickwinkel zu bestimmen, bei dem ein Umschalten zwischen den Bildbereichen erfolgen soll.

Gemäß der Erfindung wird ferner ein Fahrzeug mit einem Spiegelersatzsystem, also ein Kamera/Monitor-System geschaffen, das das oben beschriebene Sichtsystem ist.

### Kurze Beschreibung der Figuren

Nachfolgend wird die Erfindung rein beispielhaft unter Bezugnahme auf die beigefügten Figuren beschrieben, wobei gleiche Bezugszeichen gleiche oder ähnliche Komponenten kennzeichnen. Es zeigen:
- Figur 1: eine schematische Darstellung eines Sichtsystem gemäß einem Ausführungsbeispiel der vorliegenden Erfindung;
- Figur 2: eine Draufsicht auf ein Fahrzeug, das das in Figur 1 gezeigte Sichtsystem verwendet;
- Figur 3: eine Seitenansicht des in Figur 2 gezeigten Fahrzeugs;
- Figur 4: eine Draufsicht auf das Fahrzeug, das das Sichtsystem gemäß Figur 1 aufweist, gemäß einem ersten Fahrzustand;
- Figur 5: eine schematische Darstellung der Anzeige von Aufnahmebereichen und Bildbereichen bei dem in Fig. 4 gezeigten ersten Fahrzustand;
- Figur 6: eine Draufsicht auf das Fahrzeug, das das Sichtsystem gemäß Figur 1 aufweist, gemäß einem zweiten Fahrzustand;
- Figur 7: eine schematische Darstellung der Anzeige von Aufnahmebereichen und Bildbereichen bei dem in Fig. 6 gezeigten zweiten Fahrzustand, zum Zeitpunkt des Umschaltens;
- Figur 8: eine Draufsicht auf das Fahrzeug, das das Sichtsystem gemäß Figur 1 aufweist, gemäß einem dritten Fahrzustand;
- Figur 9: eine schematische Darstellung der Anzeige von Aufnahmebereichen und Bildbereichen bei dem in Fig. 8 gezeigten dritten Fahrzustand, nach einem Umschaltzeitpunkt;
- Figur 10: ein Diagramm zur Verdeutlichung des Umschaltens der Anzeige gemäß einem bevorzugten Ausführungsbeispiel der Erfindung;
- Figur 11: eine Draufsicht auf ein Fahrzeug, das das Sichtsystem gemäß Figur 1 aufweist, zur Verdeutlichung des in Figur 10 gezeigten Umschaltverfahrens;
- Figur 12: eine weitere Darstellung der Anzeige von Aufnahmebereichen und Bildbereichen, ähnlich wie Fig. 7 zum Zeitpunkt des Umschaltens;
- Figur 13: eine beispielhafte Darstellung zur Verdeutlichung der Abbildens des ersten und zweiten Bildbereichs mit unterschiedlichen Verzeichniskurven; und
- Figur 14: eine vereinfachte schematische Darstellung des Verfahrens gemäß einem Ausführungsbeispiel der Erfindung.

### Beschreibung bevorzugter Ausführungsformen

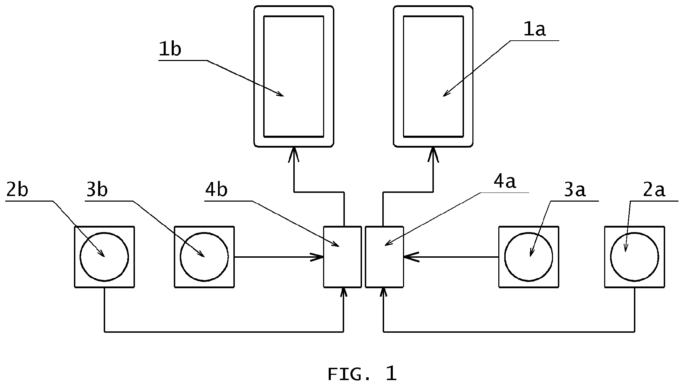

Figur 1 zeigt ein Sichtsystem gemäß einer Ausführungsform der Erfindung mit Anzeigevorrichtungen 1a, 1b, Bildaufnahmevorrichtungen 2a, 2b, 3a, 3b und Bearbeitungsvorrichtungen 4a, 4b.

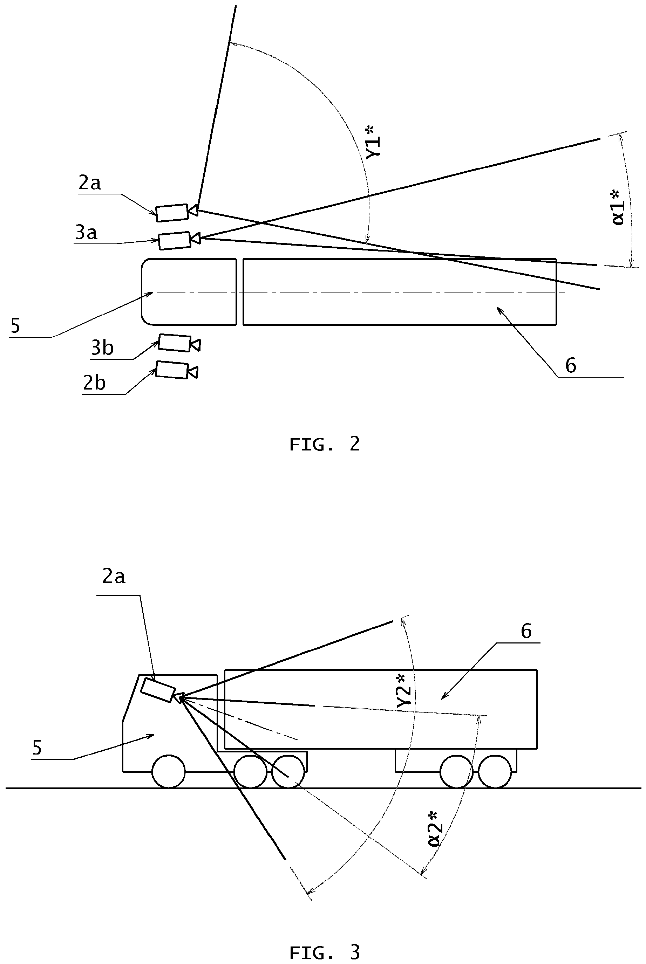

Die Bildaufnahmevorrichtungen 2a, 3a sind vorzugsweise auf einer Seite eines Fahrzeugs angeordnet, und über die Bearbeitungsvorrichtung 4a mit der Anzeigevorrichtung 1a verbunden. Die Bildaufnahmevorrichtungen 2b, 3b sind auf der gegenüberliegenden Seite des Fahrzeugs angeordnet, wie beispielsweise in Figur 2 gezeigt, und über die Bearbeitungsvorrichtung 4b mit der Anzeigevorrichtung 1b verbunden. Die Verarbeitungsvorrichtung 4a, 4b weist gemäß der bevorzugten Ausführungsform eine nicht näher gezeigte Knickwinkelbestimmungsvorrichtung, eine Bilddatenbearbeitungsvorrichtung und eine Anzeigeumschaltvorrichtung aufweist.

Der Einfachheit halber werden im Folgenden nur die Anzeigevorrichtung 1a, die Bildaufnahmevorrichtungen 2a, 3a sowie die Bearbeitungsvorrichtung 4a beschrieben. Die Ausführungen gelten jedoch analog für die Anzeigevorrichtung 1b, die Bildaufnahmevorrichtungen 2b, 3b sowie die Bearbeitungsvorrichtung 4b auf der gegenüberliegenden Seite des Fahrzeugs. Wie in Figur 1 gezeigt, sind gemäß der Ausführungsform zwei Bildaufnahmevorrichtungen 2a, 3a auf einer Seite des Fahrzeugs vorgesehen. Beliebig viele weitere Bildaufnahmevorrichtungen können verwendet werden. Gemäß der Ausführungsform sind die Bildaufnahmevorrichtungen 2a, 3a räumlich vorzugsweise in einem Bereich zwischen 10 mm und 500 mm zueinander beabstandet. Die Bildaufnahmevorrichtung 2a ist beispielsweise eine Weitwinkelkamera mit geringer Auflösung und die Bildaufnahmevorrichtung 3a beispielsweise eine Hauptkamera mit hoher Auflösung. Gemäß der Ausführungsform haben die beiden Bildaufnahmevorrichtungen unterschiedliche optische Eigenschaften.

Die Verarbeitungsvorrichtung 4a, die die oben genannte Anzeigeumschaltvorrichtung (nicht gezeigt) aufweist, ist ausgelegt, um zwischen einem von der Bildaufnahmevorrichtung 2a aufgenommenen Bild auf ein von der Bildaufnahmevorrichtung 3a aufgenommenes Bild umzuschalten, deren Anzeige jeweils auf der Anzeigevorrichtung 1a erfolgt. Die Anzeigevorrichtung 1a weist in der bevorzugten Ausführungsform ein einzelnes Anzeigefeld auf, um entweder das von der Bildaufnahmevorrichtung 2a aufgenommene Bild oder das von der Bildaufnahmevorrichtung 3a aufgenommen Bild anzuzeigen. Die Anzeigevorrichtung 1a kann auch mehrere Anzeigefelder aufweisen, auf denen gleiche oder unterschiedliche von den Bildaufnahmevorrichtungen 2a, 2b aufgenommene Bilder angezeigt werden können. Die Anzeigevorrichtung 1a dient beispielsweise als Spiegelersatzsystem für ein Fahrzeug.

Wie in Figur 2 gezeigt, weist das Fahrzeug beispielsweise ein Zugfahrzeug 5 und einen schwenkbar daran angebrachten Anhänger 6 auf.

Die in Figur 1 gezeigte Bildaufnahmevorrichtung 2a mit einem ersten Sichtwinkel α1 dient zum Erfassen von ersten Bilddaten eines ersten Aufnahmebereichs, wobei in Figur 2 die Projektion α1* des Sichtwinkels zu sehen ist, die sich horizontal, d.h. in etwa parallel zu einer ebenen Fahrbahnoberfläche aufspannt. Die Bildaufnahmevorrichtung 3a mit einem zweiten Sichtwinkel γ1 dient zum Erfassen von zweiten Bilddaten eines den ersten Aufnahmebereich überschneidenden zweiten Aufnahmebereichs wobei in Figur 2 die Projektion γ1* des Sichtwinkels gezeigt ist, wobei die erste und zweite Bildaufnahmevorrichtung 2a, 3a, wie oben erwähnt, unterschiedliche optische Eigenschaften aufweisen.

Speziell, wie in Figur 2 gezeigt, ist beispielsweise der Öffnungswinkel der Bildaufnahmevorrichtung 2a größer als der Öffnungswinkel der Bildaufnahmevorrichtung 3a. Folglich ist der zweite Aufnahmebereich größer als der erste Aufnahmebereich. Gemäß dem vorliegenden Ausführungsbeispiel ist die Bildaufnahmevorrichtung 3a eine Kamera mit hoher Auflösung und die Bildaufnahmevorrichtung 2a ist eine Weitwinkelkamera mit niedrigerer Auflösung. Figur 2 stellt erste und zweite Aufnahmebereiche in einer horizontalen Ebene dar.

Figur 3 zeigt das in Figur 2 gezeigte Fahrzeug von der Seite mit entsprechenden vertikalen Projektionen γ2*, α2* der Sichtwinkel der Bildaufnahmevorrichtungen 2a, 3a. in etwa senkrecht zu einer ebenen Fahrbahnoberfläche aufspannt. In Figur 3 ist nur die Bildaufnahmevorrichtung 2a zu sehen.

Wie oben erwähnt deckt die Bildaufnahmevorrichtung 3a mit ihrem Aufnahmebereich einen Sichtbereich bzw. ein Sichtfeld ab, der/das gemäß ECE-R46 einem "Hauptspiegel (groß) Gruppe II" entspricht, und die Bildaufnahmevorrichtung 2a mit ihrem Aufnahmebereich einen Sichtbereich bzw. ein Sichtfeld, der/das einem Weitwinkelspiegel (gemäß ECE-R46 "Weitwinkelspiegel Gruppe IV") entspricht. Andere geeignete definierte Sichtfelder können entsprechend nationaler Regelungen von den Bildaufnahmevorrichtungen 2a, 3a abgedeckt werden.

Wie in den Figuren 2 und 3 gezeigt, sind die Bildaufnahmevorrichtungen 2a, 3a derart angeordnet, dass sich die jeweiligen Aufnahmebereiche in horizontaler Ebene und die Aufnahmebereiche in vertikaler Ebene überschneiden.

Die in Figur 1 gezeigte Verarbeitungsvorrichtung 4a weist die Anzeigeumschaltvorrichtung (nicht gezeigt) auf, die bei Vorliegen einer geeigneten Umschaltbedingung zwischen einem Bildbereich, der in dem ersten Aufnahmebereich liegt und einem entsprechenden Bildbereich, der in dem zweiten Aufnahmebereich liegt, umschaltet und auf der Anzeigevorrichtung 1a anzeigt. Die Umschaltbedingung ist beispielsweise ein zwischen dem Zugfahrzeug 5 und dem Anhänger 6 definierter Knickwinkel, wie später beschrieben.

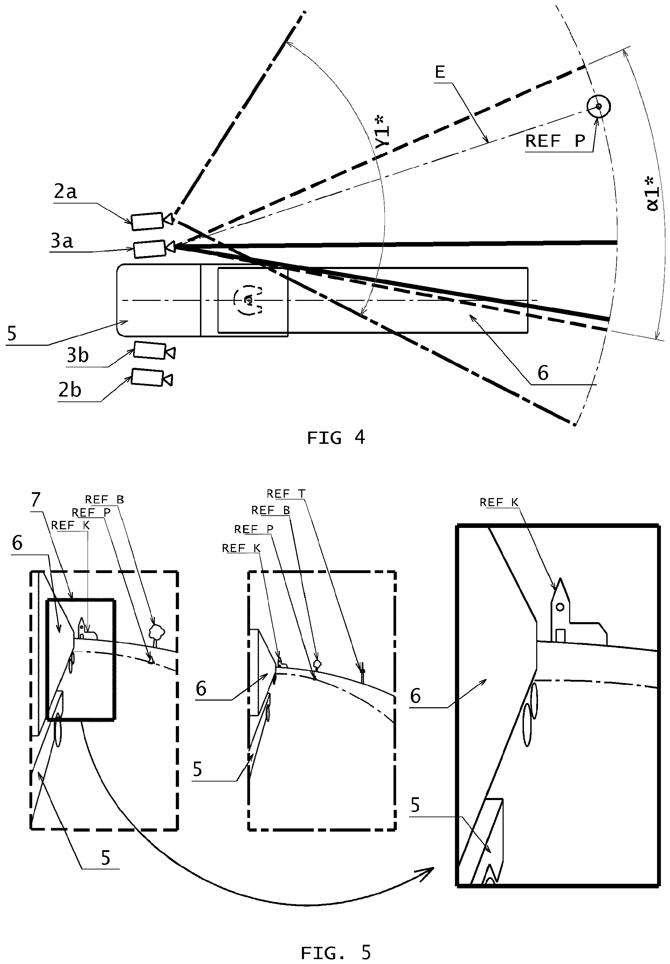

Figur 4 zeigt eine Draufsicht auf das in den Figuren 2 und 3 gezeigte Fahrzeug mit dem Zugfahrzeug 5 und dem Anhänger 6 in einem ersten Fahrzustand. Der erste Fahrzustand ist speziell derart, dass zwischen dem Zugfahrzeug 5 und dem Anhänger 6 der Knickwinkel gleich 0° beträgt.

In dem ersten Fahrzustand wird dem Fahrer des Fahrzeugs auf der Anzeigevorrichtung 3a ein erster Bildbereich 7, wie in Figur 5 gezeigt, dargestellt. Der erste Bildbereich 7 wird aus den Bilddaten des ersten Aufnahmebereichs derart extrahiert, dass gemäß dem Ausführungsbeispiel der hintere Bereich des Anhängers 6 angezeigt wird. Figur 5 zeigt gestrichelt auf der linken Seite den ersten Aufnahmebereich, der von der Bildaufnahmevorrichtung 3a abgedeckt werden kann. Gemäß der vorliegenden Ausführungsform wird bei der in Figur 4 gezeigten Fahrsituation der erste Bildbereich 7 (umrandeter Bereich auf der linken Seite in Figur 5) dem Fahrer des Fahrzeugs auf der Anzeigevorrichtung 1a dargestellt, wie in Figur 5 auf der rechten Seite gezeigt. Das auf diese Weise angezeigte Bild (rechte Seite in Figur 5) hat vorzugsweise hohe Auflösung.

Figur 5 zeigt ferner in der Mitte einen zweiten Aufnahmebereich, der von der zweiten Bildaufnahmevorrichtung 2a darstellbar ist. Wie in der Figur schematisch dargestellt, ist der zweite Aufnahmebereich weitwinkliger als der erste Aufnahmebereich, wie durch die Referenzpunkte K, P, B und T gezeigt.

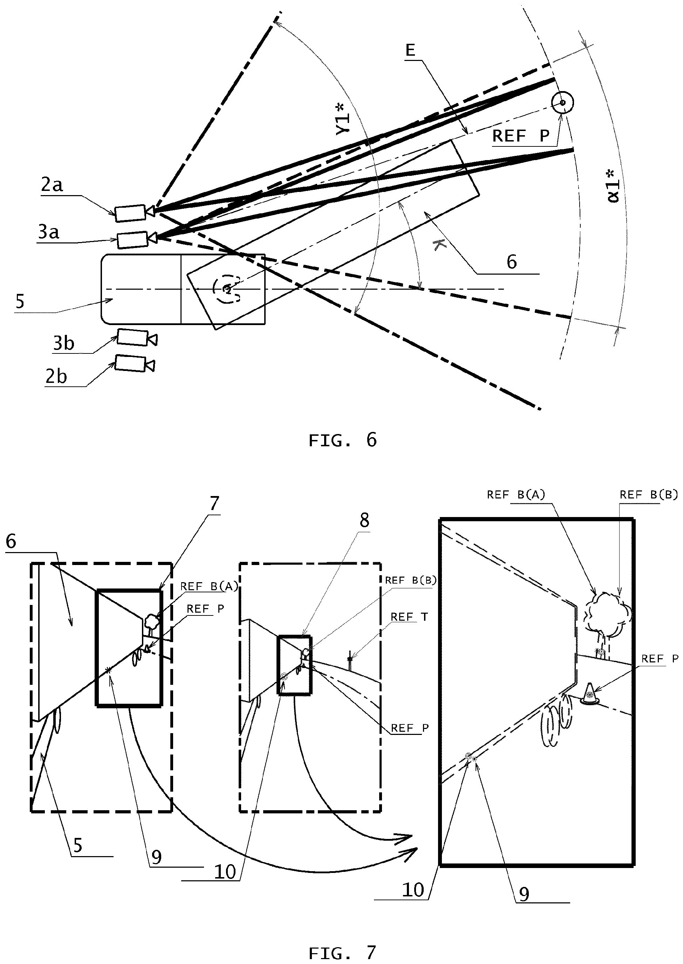

Bezugnehmend auf Figur 6 wird eine zweite Fahrsituation gezeigt, bei der zwischen dem Zugfahrzeug 5 und dem Anhänger 6 ein Knickwinkel K gebildet ist. Der Knickwinkel K wird gemäß der vorliegenden Ausführungsform durch die oben genannte in der Verarbeitungsvorrichtung 4a, 4b enthaltene Knickwinkelbestimmungsvorrichtung kontinuierlich bestimmt.

Wie durch einen Vergleich der Figuren 5 und 7 ersichtlich, bewegt sich der erste Bildbereich 7 bei größer werdendem Knickwinkel K mit dem Anhängerende (Anhängerverfolgung) und erreicht in Figur 7, linke Seite den äußeren Bereich der Bilddaten des Aufnahmebereichs der ersten Bildaufnahmevorrichtung 3a, genauer den Außenbereich des Sensors, und gleichzeitig erreicht der Anhänger 6 einen später genauer beschriebenen definierten Knickwinkel K_{D}. Bei der in Figur 6 gezeigten Fahrsituation kann ferner, wie in Figur 7 (Mitte) gezeigt, ein zweiter Bildbereich 8 dargestellt werden, der aus den von der Weitwinkelbildaufnahmevorrichtung 2a erfassten Bilddaten extrahiert wird. Der auf der linken Seite in Figur 7 dargestellte erste Bildbereich 7 entspricht dabei dem zweiten Bildbereich 8, wie in Figur 7 Mitte dargestellt. Der erste Bildbereich 7, wie in Figur 7 auf der linken Seite dargestellt, entspricht also einem Ausschnitt des ersten Aufnahmebereichs, und der zweite Bildbereich 8, wie in Figur 7 Mitte dargestellt, entspricht einem Ausschnitt des zweiten Aufnahmebereichs, wobei sich die Bilddaten des ersten Bildbereichs 7 und die Bilddaten des zweiten Bildbereichs 8 dahingehend entsprechen, dass sie bei Anzeige auf der Anzeigevorrichtung einem Betrachter als gleiche Bilder erscheinen. Der erste und zweite Bildbereich 7, 8 sind also nahezu deckungsgleich, haben jedoch unterschiedliche Auflösung.

Figur 7 zeigt speziell einen Umschaltzeitpunkt, bei dem von der Anzeige des ersten Bildbereichs 7 auf eine Anzeige des zweiten Bildbereichs 8 umgeschaltet wird. In Figur 7 rechte Seite sind zur Veranschaulichung die stilisierten Bildinhalte der Bildbereiche 7 und 8 in der Linienart ihrer Herkunftsaufnahmebereiche (linke Seite und in der Mitte der Figur) gleichzeitig dargestellt.

Figur 7 zeigt ferner auf der linken Seite einen Punkt 9, der einen beliebigen Bezugspunkt an dem Anhänger 6 angibt. Figur 7 zeigt in der Mitte einen Punkt 10, der den gleichen Bezugspunkt an dem Anhänger 6 angibt.

Wie auf der rechten Seite in Figur 7 zu sehen, sind zum Umschalt- bzw. Überblendzeitpunkt diese beiden Bezugspunkte 9, 10, im Wesentlichen an der gleichen Stellen. Die Versetzung der beiden Punkte 9, 10 hängt im Wesentlichen von dem Abstand und Ausrichtungswinkel der Bildaufnahmevorrichtungen voneinander bzw. zueinander, sowie von den optischen Eigenschaften der Bildaufnahmevorrichtungen ab, wie beispielsweise Verzeichnung, Öffnungswinkel, und Winkelauflösung.

Figur 6 zeigt ferner einen Referenzpunkt P, der gemäß dem Ausführungsbeispiel auf einer Ebene E liegt, die durch einen Punkt in einem Bereich der hinteren Kante des Anhängers 6 und durch die erste Bildaufnahmevorrichtung 3a verläuft. Dieser Referenzpunkt P ist ebenfalls in Figur 7 auf der linken Seite und in der Mitte dargestellt und in den jeweiligen Bildbereichen 7, 8 enthalten. Die jeweiligen Ausrichtungswinkel der ersten und zweiten Bildaufnahmevorrichtung 2a, 3a werden bestimmt durch den auf der Anzeigevorrichtung angezeigten Referenzpunkt P, der den gleichen Pixelkoordinaten in dem ersten und zweiten Bildbereich 7, 8 entspricht.

Wie in Figur 7 rechte Seite gezeigt, wird zum Umschaltzeitpunkt von der Anzeige des ersten Bildbereichs 7 auf die Anzeige des zweiten Bildbereichs 8 derart gewechselt, dass die von dem Benutzer wahrnehmbaren Bilder nahezu deckungsgleich sind. Speziell unterscheiden sich entsprechende Bilddaten in dem ersten und zweiten Bildbereich 7, 8, um beispielsweise maximal 30 Pixel auf der Anzeige, um einen derartigen Eindruck bzw. Wahrnehmung für den Benutzer bereitzustellen. In Figur 7 rechte Seite sind beispielsweise die oben genannten Bezugspunkte 9 und 10 um eine bestimmte Anzahl von Pixeln voneinander beabstandet. Im Referenzpunkt P sind die entsprechenden Pixel des ersten und zweiten Bildbereichs nahezu deckungsgleich, wobei der Abstand entsprechender Pixel des ersten und zweiten Bildbereichs zueinander mit zunehmender Entfernung von dem Referenzpunkt P größer wird.

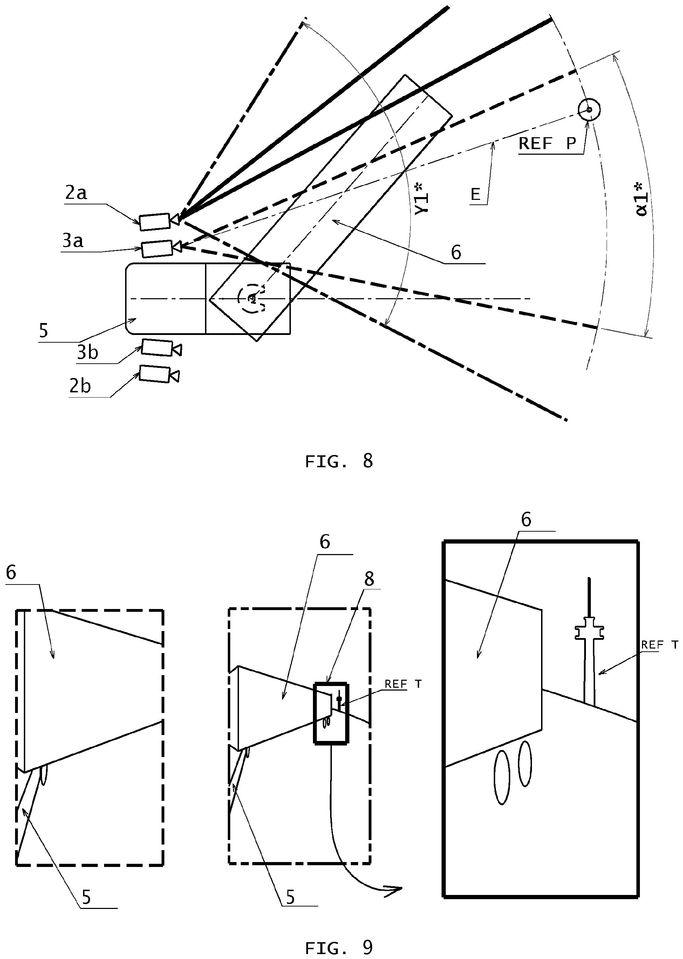

Figur 8 zeigt eine dritte Fahrsituation, bei der sich verglichen mit Figur 6 der Knickwinkel zwischen dem Zugfahrzeug 5 und dem Anhänger 6 weiter vergrößert hat. Wie in Figur 9 gezeigt, wird bei dieser Fahrsituation der zweite Bildbereich 8 der weitwinkligen Bildaufnahmevorrichtung 2a, auf den in Figur 7 umgeschaltet worden ist, angezeigt, Wie in Figur 9 linke Seite gezeigt, kann die erste Bildaufnahmevorrichtung 3a nicht mehr die hintere Kante des Anhängers 6 erfassen, da die hintere Kante des Anhängers 6 außerhalb des ersten Aufnahmebereichs ist.

Figur 9 zeigt also auf der rechten Seite dem Benutzer des Sichtsystems eine Anzeige des zweiten Bildbereichs 8 der weitwinkligen Bildaufnahmevorrichtung 2a, umgeschaltet von der Anzeige des ersten Bildbereichs 7 der Bildaufnahmevorrichtung 3a mit hoher Auflösung, wie in den Figuren 5 und 7 gezeigt. Der Umschaltzeitpunkt wird in Abhängigkeit von einer Umschaltbedingung bestimmt, die gemäß der bevorzugten Ausführungsform durch den Knickwinkel definiert ist.

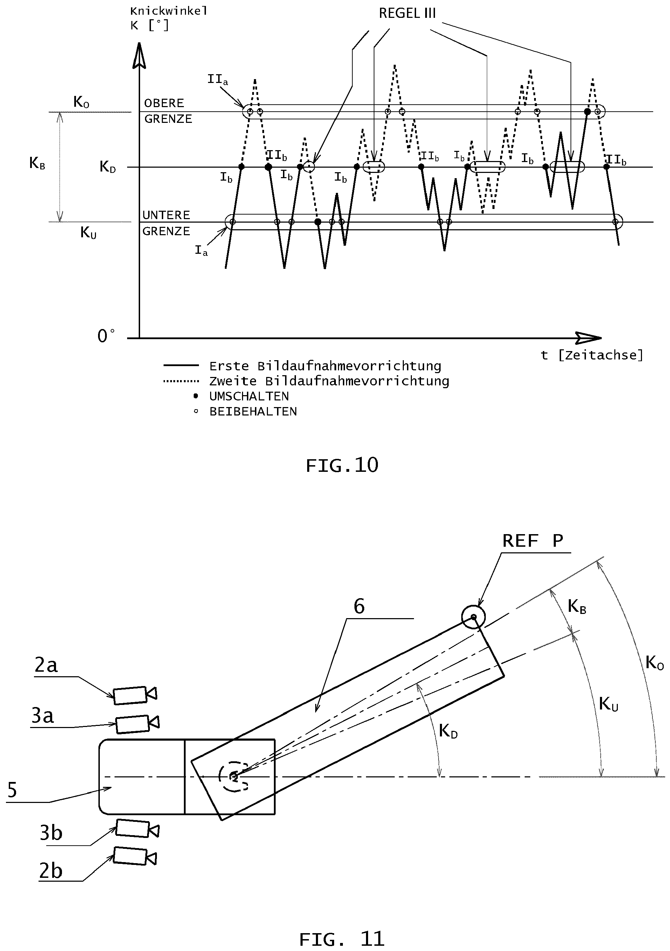

Unter Bezugnahme auf die Figuren 10 und 11 wird ein Verfahren beschrieben, bei dem die Umschaltbedingung von dem Knickwinkel zwischen Zugfahrzeug und Anhänger abhängt.

Gemäß dem Ausführungsbeispiel hängt die Umschaltbedingung speziell von einem definierten Knickwinkel K_{D} ab, der in einem vorgegebenen Knickwinkelbereich K_{B} mit einer unteren Knickwinkelgrenze Ku und einer oberen Knickwinkelgrenze Ko liegt, wie in den Figuren 10 und 11 gezeigt.

In Figur 10 gibt die die durchgezogene Linie die Aktivierung der ersten Bildaufnahmevorrichtung an, die punktierte Linie gibt die Aktivierung der zweiten Bildaufnahmevorrichtung an, der schwarze Punkt gibt ein Umschalten zwischen beiden Bildaufnahmevorrichtungen an, und der Kreis gibt ein Beibehalten des aktuellen Aktivierungszustands einer Bildaufnahmevorrichtung an.

Wie in Figur 10 gezeigt, wenn der augenblickliche Knickwinkel zwischen dem Zugfahrzeug 5 und dem Anhänger 6 die untere Knickwinkelgrenze Ku erreicht, wird die erste Bildaufnahmevorrichtung 2a aktiviert und der erste Bildbereich 7 auf der Anzeigevorrichtung dargestellt, wie in Figur 5 gezeigt. Wenn, wie in Figur 10 gezeigt, der augenblickliche Knickwinkel den definierten Knickwinkel K_{D} dann zum ersten Mal erreicht, wird auf die zweite Bildaufnahmevorrichtung umgeschaltet und der zweite Bildbereich 8 auf der Anzeigevorrichtung angezeigt, wie in Figur 9 gezeigt. Dieser Umschaltzeitpunkt ist in Figur 7 verdeutlicht, wie oben beschrieben.

Wenn der augenblickliche Knickwinkel die obere Knickwinkelgrenze Ko erreicht, wie in Figur 10 gezeigt, und anschließend wieder den definierten Knickwinkel K_{D}, wird erneut auf die erste Bildaufnahmevorrichtung umgeschaltet.

Wie in Figur 10 verdeutlicht, wird zwischen der ersten und zweiten Bildaufnahmevorrichtung nur umgeschaltet, wenn der definierte Knickwinkel K_{D} erreicht wird und zuvor wenigstens einmal die untere oder obere Knickwinkelgrenze erreicht worden ist. Auf diese Weise wird ein schnell aufeinanderfolgendes Umschalten zwischen der ersten Bildaufnahmevorrichtung und der zweiten Bildaufnahmevorrichtung verhindert.

In Figur 10 ist das Umschalten zwischen der Aktivierung der Bildaufnahmevorrichtungen durch folgende Regeln zusammenfassend verdeutlicht:
Regel Ia: "Wenn der Knickwinkel die untere Knickwinkelgrenze Ku erreicht, wird die erste Bildaufnahmevorrichtung aktiviert, (wenn diese bereits aktiv ist, bleibt diese aktiv, wenn die zweite Bildaufnahmevorrichtung aktiv ist, wird auf die erste Bildaufnahmevorrichtung umgeschaltet)";
Regel Ib: "Anschließendes Umschalten von der ersten Bildaufnahmeeinheit auf die zweite Bildaufnahmeeinheit, wenn der definierten Knickwinkels K_{D} erreicht wird";
Regel IIa: "Wenn der Knickwinkel die obere Knickwinkelgrenze Ko erreicht, wird die zweite Bildaufnahmevorrichtung aktiviert, (wenn die zweite Bildaufnahmevorrichtung bereits aktiv ist, bleibt diese aktiv, wenn die erste Bildaufnahmevorrichtung aktiv ist, wird auf die zweite Bildaufnahmevorrichtung umgeschaltet)";
Regel IIb: "Anschließendes Umschalten von der zweiten Bildaufnahmevorrichtung auf die erste Bildaufnahmevorrichtung, wenn der definierte Knickwinkel K_{D} erreicht wird"; und
Regel III: "Wenn der Knickwinkel den definierten Knickwinkel K_{D} erreicht, ohne vorher die untere Knickwinkelgrenze K_{U} oder die obere Knickwinkelgrenze K_{O} erreicht zu haben, erfolgt kein Umschalten".

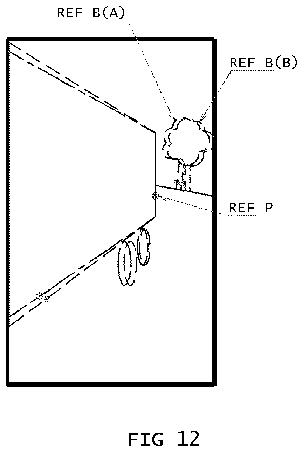

Die Figuren 11 und 12 zeigen ferner einen Referenzpunkt P, der derart gewählt ist, dass er an der hinteren Kante des Anhängers 6 vorgesehen ist. Der Referenzpunkt P wird beispielsweise gemäß der Ausführungsform auf der Anzeigevorrichtung dem Benutzer bzw. dem Fahrer angezeigt. Dieser kann den Referenzpunkt P frei wählen und beispielsweise, wie in Figur 11 gezeigt an der hinteren Kante des Anhängers 6 platzieren. Wie in Figur 12 gezeigt, wird dadurch bei dem Umschalten von dem ersten Bildbereich auf den zweiten Bildbereich, wie oben beschrieben, speziell die Kante des Anhängers 6 nahezu identisch zwischen dem ersten Bildbereich und dem zweiten Bildbereich dargestellt, der Benutzer kann also nahezu keinen Unterschied bzw. keine Pixelversetzung zwischen dem ersten Bildbereich und dem zweiten Bildbereich am Referenzpunkt wahrnehmen.

Auf diese Weise kann der Benutzer einen geeigneten Bereich, der zum Umschaltzeitpunkt möglichst "deckungsgleich" dargestellt werden soll, auswählen.

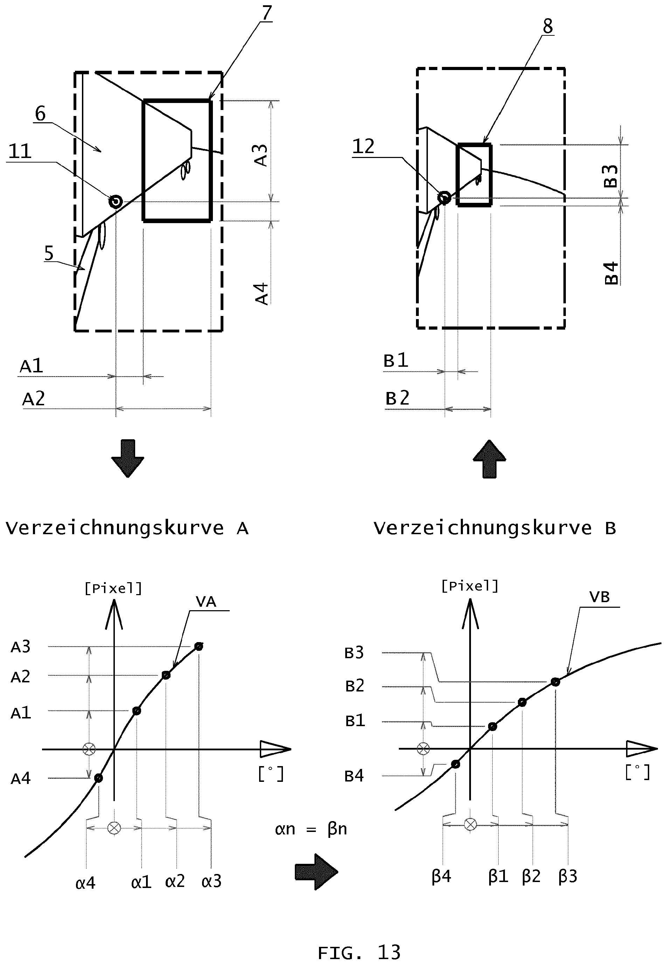

Figur 13 zeigt ein beispielhaftes Verfahren, um den ersten Bildbereich 7 und den zweiten Bildbereich 8 derart aufeinander abzubilden, dass ein nahezu deckungsgleiches Bild (kleinstmöglicher Bildunterschied) entsteht.

Wie oben erwähnt, wird gemäß dem Ausführungsbeispiel der erste Aufnahmebereich, wie oben links in Figur 13 gezeigt, von der Bildaufnahmevorrichtung mit hoher Auflösung erfasst, wohingegen der zweite Aufnahmebereich, wie oben rechts in Figur 13 gezeigt, von einer weitwinkligen Bildaufnahmevorrichtung erfasst wird. Die jeweiligen Abstände A1 bis A4 entsprechend den Abständen der jeweiligen Ränder des in der Figur rechteckig dargestellten ersten Bildbereichs 7 zu der optischen Achse 9 der Bildaufnahmevorrichtung 3a. Entsprechend kennzeichnen B1 bis B4 oben rechts in Figur 13 die jeweiligen Abstände der Ränder des rechteckig dargestellten zweiten Bildbereichs 8 zu der optischen Achse 10 der zweiten Bildaufnahmevorrichtung 2a.

Da, wie oben beschrieben, gemäß der bevorzugten Ausführungsform die beiden Bildaufnahmevorrichtungen unterschiedliche optische Eigenschaften aufweisen, beispielsweise unterschiedliche Verzeichnungskurven, wie in Figur 13 gezeigt, kann gemäß den in Figur 13 beispielhaft gezeigte Verzeichniskurven der erste Bildbereich 7 und der zweiten Bildbereich 8 derart aufeinander abgebildet werden, dass im Wesentlichen deckungsgleiche Bilder wahrgenommen werden können.

Die in Figur 13 gezeigten Verzeichniskurven der Bildaufnahmevorrichtungen sind lediglich beispielhaft. Durch Verwenden geeigneter Verzeichniskurven ist es beispielsweise möglich eine sehr hohe Auflösung dort zu erzielen, wo sie benötigt bzw. gefordert ist, d.h. in dem höchst relevanten Bereich der Fahrzeugumgebung, der innerhalb des erfassten Teilbereichs der Fahrzeugumgebung liegt.

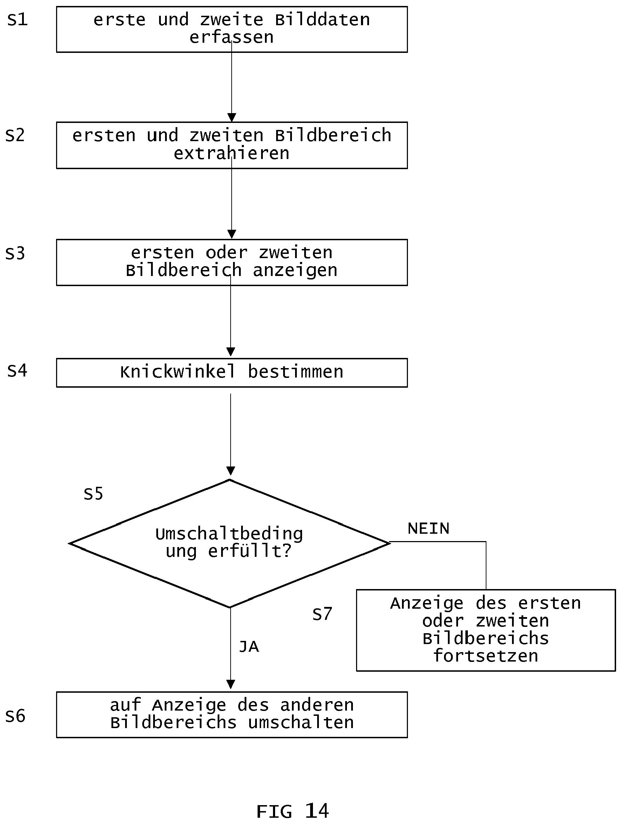

Fig. 14 zeigt stark vereinfacht das oben beschriebene Verfahren gemäß einer Ausführungsform zum Verdeutlichen des Umschaltens zwischen der Anzeige zweier einander entsprechender Bildbereiche in Abhängigkeit von einem Knickwinkel zwischen einem Zugfahrzeug und einem Anhänger.

In Schritt S1 werden erste und zweite Bilddaten von Bildaufnahmevorrichtung erfasst, die unterschiedliche optische Eigenschaften haben, unterschiedliche Aufnahmebereiche haben und unterschiedliche Sichtbereiche abdecken, wie oben beschrieben. In Schritt S2 werden aus den erfassten Bilddaten erste und zweite Bildbereiche extrahiert, die sich bezüglich Bildinformation entsprechen, wie oben beschrieben. In Schritt S3 wird der erste oder der zweite Bildbereich auf der Anzeige angezeigt, wie oben beschrieben erfolgt dies entweder auf einem gleichen Anzeigefeld oder auf verschiedenen voneinander getrennten Anzeigefeldern. Beispielsweise kann auf einem Anzeigefeld ein hochaufgelöstes Bild angezeigt werden und auf einem Anzeigefeld daneben ein Weitwinkelbild. Gemäß der bevorzugten Ausführungsform werden die einander entsprechende ersten und zweiten Bildbereiche auf dem gleichen Anzeigefeld angezeigt bzw. überblendet, wie oben beschrieben. In Schritt S4 wird der Knickwinkel bestimmt, wie oben beschrieben. In Schritt S5 wird bestimmt, ob eine Umschaltbedingung, die auf dem Knickwinkel basiert, wie oben beschrieben, erfüllt ist. Ist die Bedingung erfüllt, wird in Schritt S6 auf die Anzeige des Bildbereichs umgeschaltet, der vorher nicht angezeigt worden ist. Ist die Bedingung nicht erfüllt, wird in Schritt S7 die Anzeige des vorher angezeigten Bildbereichs fortgesetzt.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

### Bezugszeichenliste

- 1a, 1b: Anzeigevorrichtung
- 2a, 2b: erste Bildaufnahmevorrichtung
- 3a, 3b: zweite Bildaufnahmevorrichtung
- 4a, 4b: Verarbeitungsvorrichtung
- 5: Zugfahrzeug
- 6: Anhänger
- α1*: erste Projektion
- γ1*: zweite Projektion
- 7: erster Bildbereich
- 8: zweiter Bildbereich
- 9: Bezugspunkt
- 10: Bezugspunkt
- 11: optische Achse
- 12: optische Achse
- E: Ebene
- P: Referenzpunkt

## Patentansprüche

1. Verfahren zum Umschalten zwischen einem ersten und zweiten Bildbereich (7, 8) auf einer Anzeigevorrichtung in einem Fahrzeug mit einem Zugfahrzeug (5) und einem am Zugfahrzeug (5) schwenkbar angebrachten Anhänger (6), mit:
Erfassen von ersten Bilddaten durch eine erste Bildaufnahmevorrichtung (2a, 2b) eines ersten Aufnahmebereichs;
Erfassen von zweiten Bilddaten durch eine zweite Bildaufnahmevorrichtung (3a, 3b) eines den ersten Aufnahmebereich überschneidenden zweiten Aufnahmebereichs, wobei die erste und zweite Bildaufnahmevorrichtung (2a, 2b, 3a, 3b) unterschiedliche optische Eigenschaften aufweisen;
Bearbeiten der ersten und zweiten Bilddaten zum Extrahieren des ersten Bildbereichs (7) aus den ersten Bilddaten und zum Extrahieren des zweiten Bildbereichs (8) aus den zweiten Bilddaten;
Anzeigen des ersten Bildbereichs (7) und/oder des zweiten Bildbereichs (8) in einem gleichen Anzeigefeld der Anzeigevorrichtung (1a, 1b);
kontinuierliches Bestimmen eines Knickwinkels zwischen dem Zugfahrzeug (5) und dem Anhänger (6) durch eine Knickwinkelbestimmungsvorrichtung;
Umschalten oder Überblenden der Anzeige des ersten Bildbereichs (7) und der Anzeige des zweiten Bildbereichs (8) basierend auf einer Umschaltbedingung, die durch einen definierten Knickwickel K_{D} bestimmt wird, wobei zum Umschaltzeitpunkt die ersten Bilddaten des ersten Bildbereich (7) den Bilddaten des zweiten Bildbereichs (8) derart entsprechen, dass die jeweils aufgrund der ersten und zweiten Bilddaten von einem Benutzer auf der Anzeigevorrichtung (1a, 1b) wahrnehmbaren Bilder nahezu deckungsgleich sind.

2. Verfahren nach Anspruch 1, bei dem das Umschalten durchgeführt wird, wenn ein augenblicklich bestimmter Knickwinkel oberhalb oder unterhalb des definierten Knickwinkels K_{D} ist.

3. Verfahren nach Anspruch 1 oder 2, bei dem der definierte Knickwinkel K_{D} innerhalb eines Knickwinkelbereichs K_{B} mit einer unteren Knickwinkelgrenze Ku und einer oberen Knickwinkelgrenze K_{O} liegt, und das Umschalten oder Überblenden durchgeführt wird, wenn:
wenn die Anzeige des ersten Bildbereichs (7) aktiviert ist, Umschalten auf eine Aktivierung der Anzeige des zweiten Bildbereichs (8), wenn der Knickwinkel den definierten Knickwinkel K_{D} erreicht und seit dem letzten Umschalten die unter Knickwinkelgrenze Ku wenigsten einmal erreicht hat; und
wenn die Anzeige des zweiten Bildbereichs (8) aktiviert ist, Umschalten auf eine Aktivierung der Anzeige des ersten Bildbereichs (7), wenn der Knickwinkel den definierten Knickwinkel K_{D} erreicht und seit dem letzten Umschalten wenigsten einmal die obere Knickwinkelgrenze K_{O} erreicht hat.

4. Verfahren nach einem der Ansprüche 1 bis 3, bei dem eine Grundeinstellung derart ist, dass der erste Bildbereich (7) solange angezeigt wird, bis der Knickwinkel entweder den definierten Knickwinkel K_{D} oder die obere Knickwinkelgrenze K_{O} erreicht.

5. Sichtsystem für ein Fahrzeug, das ein Zugfahrzeug (5) und einen am Zugfahrzeug (5) schwenkbar angebrachten Anhänger (6) aufweist, mit:
mindestens einer ersten Bildaufnahmevorrichtung (2a, 2b) zum Erfassen von ersten Bilddaten eines ersten Aufnahmebereichs;
mindestens einer zweiten Bildaufnahmevorrichtung (3a, 3b) zum Erfassen von zweiten Bilddaten eines den ersten Aufnahmebereich überschneidenden zweiten Aufnahmebereichs, wobei die erste und zweite Bildaufnahmevorrichtung (2a, 2b, 3a, 3b) unterschiedliche optische Eigenschaften aufweisen;
einer Vorrichtung (4a, 4b,) zum Bearbeiten der ersten und zweiten Bilddaten zum Extrahieren eines ersten Bildbereichs (7) aus den ersten Bilddaten und zum Extrahieren eines zweiten Bildbereichs (8) aus den zweiten Bilddaten1;
einer Anzeigevorrichtung (1a, 1b) zum Anzeigen des ersten Bildbereichs (7) und/oder des zweiten Bildbereichs (8) in einem gleichen Anzeigefeld der Anzeigevorrichtung (1a, 1b);
einer Knickwinkelbestimmungsvorrichtung oder -methode zum kontinuierlichen Bestimmen eines Knickwinkels zwischen dem Zugfahrzeug (5) und dem Anhänger (6); und
einer Anzeigeumschaltvorrichtung zum Umschalten oder Überblenden der Anzeige des ersten Bildbereichs (7) und der Anzeige des zweiten Bildbereichs (8) basierend auf einer Umschaltbedingung, die durch einen definierten Knickwickel K_{D} bestimmt ist, wobei zum Umschaltzeitpunkt die ersten Bilddaten des ersten Bildbereich (7) den Bilddaten des zweiten Bildbereichs (8) derart entsprechen, dass die jeweils aufgrund der ersten und zweiten Bilddaten von einem Benutzer auf der Anzeigevorrichtung (1a, 1b) wahrnehmbaren Bilder nahezu deckungsgleich sind.

6. Sichtsystem nach Anspruch 5, bei dem sich in dem ersten und zweiten Bildbereich entsprechende Bilddaten sich jeweils um max. 30 Pixel auf der Anzeige der Anzeigevorrichtung (1a, 1b) unterscheiden.

7. Sichtsystem nach Anspruch 5 oder 6, bei der Abstand zwischen der ersten und zweiten Bildaufnahmevorrichtung (2a, 2b, 3a, 3b) vorzugsweise in einem Bereich zwischen 10 mm und 500 mm liegt.

8. Sichtsystem nach einem der Ansprüche 5 bis 7, bei dem die optischen Achsen der ersten und zweiten Bildaufnahmevorrichtung (2a, 2b, 3a, 3b) in Abhängigkeit von deren Öffnungswinkeln unter einem Ausrichtungswinkel von 0° bis 60° zueinander ausgerichtet sind.

9. Sichtsystem nach Anspruch 8, bei dem der jeweiliger Ausrichtungswinkel der ersten und zweiten Bildaufnahmevorrichtung (2a, 2b, 3a, 3b) bestimmt wird durch einen auf der Anzeigevorrichtung (1a, 1b) angezeigte Referenzpunkt (P), der gleichen Pixelkoordinaten/Bilddaten in dem ersten und zweiten Bildbereich (7, 8) entspricht.

10. Sichtsystem nach Anspruch 9, bei dem der Referenzpunkt (P) vordefiniert oder in Abhängigkeit von Anhängerhöhe und/oder Anhängerlänge einstellbar ist.

11. Sichtsystem nach Anspruch 10, bei dem der Referenzpunkt (P) auf einer senkrecht zur Fahrbahn stehenden Ebene (E) liegt, die durch einen Punkt in einem Bereich der hinteren Kante des Anhängers (6) bei dem definierten Knickwinkel K_{D} und durch die erste oder zweite Bildaufnahmevorrichtung (2a, 2b, 3a, 3b) verläuft, wobei
der Referenzpunkt (P) insbesondere von der ersten bzw. zweiten Bildaufnahmevorrichtung (2a, 2b, 3a, 3b) beabstandet ist und bei dem definierten Knickwinkel K_{D} im Bereich der hinteren Kante des Anhängers (6) liegt.

12. Sichtsystem nach einem der Ansprüche 5 bis 11, bei dem die optischen Eigenschaften der ersten und zweiten Bildaufnahmevorrichtung (2a, 2b, 3a, 3b) unterschiedliche Winkelauflösungen, Öffnungswinkel und/oder Verzeichnungen aufweisen.

13. Sichtsystem nach einem der Ansprüche 5 bis 12, bei dem der definierte Knickwinkel K_{D} in einem Knickwinkelbereich K_{B} mit einer unteren Knickwinkelgrenze Ku und einer oberen Knickwinkelgrenze Ko liegt, wobei
der definierte Knickwinkel K_{D} sich insbesondere in Abhängigkeit von einer Fahrsituation des Fahrzeugs innerhalb des Knickwinkelbereichs K_{B} ändert.

14. Sichtsystem nach einem der vorangegangenen Ansprüche, bei dem die Anzeigeumschaltvorrichtung angepasst ist zum Steuern des Umschaltens zwischen dem ersten und zweiten Bildbereich (7, 8) gemäß dem Verfahren nach einem der Ansprüche 1 bis 3.

15. Fahrzeug mit einem Spiegelersatzsystem, das ein Sichtsystem nach einen der Ansprüche 5 bis 14 ist.
